# EUROPÄISCHE PATENTSCHRIFT

(11) **EP 0 691 500 B1**
(45) Veröffentlichungstag und Bekanntmachung des Hinweises auf die Patenterteilung: **19.08.1998**
(21) Anmeldenummer: 95108294.0
(22) Anmeldetag: 31.05.1995
(51) Int. Cl.: F16L 37/084

(54) **Verbindungsanordnung für Rohre**
Arrangement for connecting pipes
Ensemble pour la connection des tuyaux

(30) Priorität: 09.07.1994 DE 4424258
(43) Veröffentlichungstag der Anmeldung: 10.01.1996
(73) Patentinhaber: Friatec Aktiengesellschaft, 68229 Mannheim (DE)
(72) Erfinder: Bläss, Jürgen, D-68452 Heddesheim (DE); Frank, Uwe, D-64625 Bensheim (DE); Kropp, Michael, D-68535 Edingen-Neckarhausen (DE); Lippe, Manfred, D-47809 Krefeld-Bockum (DE); Mannweiler, Gudrun, D-68629 Lampertheim (DE); Münster, Wilfried, D-69118 Heidelberg (DE); Schulze, Hans, D-68535 Edingen-Neckarhausen (DE)
(74) Vertreter: Klose, Hans, Dipl.-Phys.

(56) Entgegenhaltungen:
- GB-A- 1 555 640
- GB-A- 2 071 798
- GB-A- 2 143 918

## Beschreibung

Die Erfindung bezieht sich auf eine Verbindungsanordnung für Rohre gemäß den im Oberbegriff des Patentanspruchs 1 angegebenen Merkmalen, welche durch die GB-A-1 555 640 bekannt ist.

Aus dem britischen Patent 15 20 150 ist weiter eine artige Verbindungsanordnung bekannt, welche einen Muffenkörper zur Aufnahme des Endes des zu verbindenden Rohres aufweist. Der Muffenkörper besitzt eine ringförmige Ausnehmung zur Aufnahme eines Dichtringes. Ferner ist in dieser Ausnehmung ein Haltering vorgesehen, welcher nach Innen zur Längsachse weisende Krallen oder dergleichen aufweist. Der Innendurchmesser dieser Krallen ist kleiner als der Außendurchmesser des einzuführenden Rohres. Der Haltering besteht zweckmäßig aus Federstahl und nach dem Einführen des Rohres verhaken die Krallen in der Außenfläche des Rohres, um dieses festzuhalten und bezüglich des Muffenkörpers zu fixieren. Der aus Metall bestehende Haltering ist bezüglich des Dichtringes zur Innenseite hin angeordnet und gelangt mit dem Medium der Rohrleitung in Berührung, wobei infolge von Korrosion der Haltering beschädigt und die Verbindung mit dem Rohr gelöst werden kann. Mittels eines Ringkörpers werden der Dichtring und der Haltering in der Ausnehmung festgehalten. Der Ringkörper und ebenso der Muffenkörper bestehen aus Kunststoff, welcher insbesondere infolge Wärmedehnungen seine Form verändern kann, so daß die Dichtwirkung beeinträchtigt wird. Der Haltering, der Dichtring und ein Distanzring sind lose in der Ausnehmung angeordnet und werden dort mittels des Ringkörpers gehalten. Es besteht die Gefahr, daß durch Lösen der Überwurfmutter der Dichtring oder der Haltering verlorengehen und letztendlich eine sichere Montage und Verbindung infrage gestellt sind.

Hiervon ausgehend liegt der Erfindung die Aufgabe zugrunde, die Verbindungsanordnung der genannten Art mit einem geringen konstruktiven Aufwand dahingehend weiterzubilden, daß eine funktionssichere Verbindung dauerhaft gewährleistet werden kann. Um Montagefehler zu vermeiden, soll die Verbindungsanordnung werkseitig weitmöglichst vorgefertigt werden. Ferner soll mit der Verbindungsanordnung der Übergang zwischen Rohrsystemen unterschiedlicher Materialeigenschaften ermöglicht werden, wobei vor allem auf klebbare Rohre einerseits und nicht bzw. schlecht klebbare oder flexible Rohre andererseits verwiesen sei. Die Verbindungsanordnung soll einen geringen Montageaufwand erfordern und eine hohe Funktionssicherheit aufweisen, wie es vor allem in Rohrleitungssystemen für warmes oder kaltes Frischwasser oder für Heizungssysteme in der Gebäudeinstallation gefordert ist.

Die Lösung dieser Aufgabe erfolgt bei einer Verbindungsanordnung der genannten Art gemäß den kennzeichnenden Merkmalen des Patentanspruchs 1.

Die vorgeschlagene Verbindungsanordnung zeichnet sich durch eine funktionsgerechte Konstruktion aus und gewährleistet eine funktionssichere und dauerhafte Verbindung. Der Haltering ist bezüglich des Dichtungsringes zur Außenseite hin angeordnet, so daß die Gefahr einer Korrosion erheblich reduziert ist. Der Haltering ist nicht innerhalb der Ausnehmung des Dichtringes angeordnet, sondern umgibt radial außenliegend den Bereich der Ausnehmung mit dem Dichtring. Der aus Metall bestehende Haltering stabilisiert somit in besonders zweckmäßiger Weise, vorzugsweise radial, den Dichtbereich, ohne daß der Muffenkörper dort eine große Wandstärke aufweisen müßte. Der Haltering ist werkseitig unverlierbar mit dem Muffenkörper verbunden, wodurch eine sichere Festlegung des Dichtringes in der Ausnchmung gewährleistet ist. Der Haltering und der Muffenkörper sind von dem Ringkörper in Form einer Führungshaube umgeben. Die Führungshaube besitzt in zweckmäßiger Weise einen ringförmigen Ansatz bzw. eine Verlängerung, wodurch eine gute Führung des eingesetzten Rohres gewährleistet ist; radiale Kräfte oder Momente werden folglich vom Haltering ebenso wie vom Dichtring zweckmäßiger Weise ferngehalten, was vor allem bei Ausbildung des Rohres aus flexiblem Material von Vorteil ist.

In einer besonderen Ausgestaltung der Erfindung sind die Haltekrallen separat vom Haltering an einem zusätzlichen Sicherungsring angeordnet, welcher vom Haltering in zweckmäßiger Weise in der Ausnehmung festgehalten wird. Der Sicherungsring fixiert mit seinen Haltekrallen radial innen das eingeführte Rohrende und ist bezüglich des Muffenkörpers, insbesondere in dessen Ausnehmung, drehbar. Somit ist auch das mittels des Sicherungsrings im Muffenkörper axial fixierte Rohrende bezüglich des Muffenkörpers drehbar. Das Rohrende kann folglich nicht durch Drehen demontiert werden. Der Haltering besitzt ein radial nach innen abgewinkeltes Vorderteil, dessen Innenradius kleiner ist als der Außenradius des Sicherungsrings, welcher somit funktionssicher axial mittels des Halterings festgelegt und abgestützt ist. Der Innendurchmesser des abgewinkelten bzw. radial nach innen abgekanteten Vorderteils des Halterings ist hingegen größer als der Außendurchmesser des einzuführenden Rohrendes, dessen Drehbarkeit bezüglich der Längsachse folglich vom Haltering nicht beeinträchtigt wird. Das den Sicherungsring umgreifende Vorderteil des Halterings gewährleistet eine zusätzliche axiale Abstützung der Haltekrallen oder Segmente des Sicherungsrings, so daß beim Einwirken von axialen Zugkräften, und zwar in Richung aus dem Muffenkörper heraus, eine funktionssichere Abstützung gewährleistet und beispielsweise ein Umklappen der Haltekrallen oder gar ein Herauslösen des Rohrendes aus dem Muffenkörper mit hoher Sicherheit vermieden wird.

Weiterbildungen und besondere Ausgestaltungen der Erfindung sind in den Unteransprüchen sowie der nachfolgenden Beschreibung angegeben.

Die Erfindung wird nachfolgend anhand der in der Zeichnung dargestellten besonderen Ausführungsbeispiele näher erläutert. Es zeigen:
- Fig. 1: einen axialen Schnitt durch die Verbindungsanordnung, dcrcn Haltering die Haltekrallen aufweist,
- Fig. 2: einen axialen Schnitt durch eine weitere Ausführungsform mit einem drehbaren, die Haltekrallen aufweisenden Sicherungsring,
- Fig. 3: einen Schnitt entlang der Schnittlinie III gemäß Fig. 2.

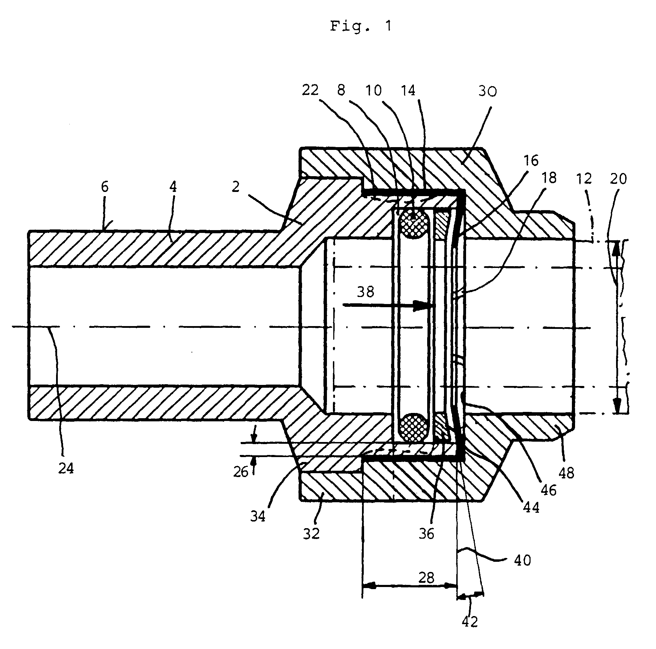

Die Verbindungsanordnung enthält gemäß Fig. 1 einen Muffenkörper 2, mit welchem ein hülsenförmiger Nippel oder Stutzen 4 verbunden ist. Der Muffenkörper 2 und der Stutzen 4 sind zweckmäßig einteilig ausgebildet, wobei die Außenfläche 6 des Stutzens 4 zum Anschluß an eine Rohrleitung, eine Armatur, ein Formstück oder dergleichen ausgebildet ist. Der Muffenkörper 2 und der integral angeformte Stutzen 4 bestehen insbesondere aus einem klebbaren Kunststoff und zur Herstellung der Verbindung mit der Rohrleitung oder dergleichen wird auf die Außenfläche 6 Klebstoff aufgetragen und nachfolgend wird der Stutzen 4 in das Innere der Rohrleitung oder dergleichen eingesetzt.

Im Rahmen dieser Erfindung können alternativ auch andere Verbindungstechniken des Muffenkörpers 2 mit einem hier nicht weiter erläuterten Rohrsystem vorgesehen sein. Ferner kann im Rahmen dieser Erfindung der Muffenkörper 2 Bestandteil einer Armatur, eines Fittings oder dergleichen sein. Desweiteren kann in einer alternativen Ausgestaltung der in der Ausführungsform gemäß Fig. 1 als Klebnippel ausgebildete Stutzen 4 außen ein Gewinde zur Verbindung mit einer Armatur, einem Installationselement oder dergleichen aufweisen.

Der Muffenkörper 2 enthält eine zum freien Ende offene Ausnehmung 8, in welcher ein Dichtring 10 angeordnet ist. In den Muffenkörper 2 ist das Ende eines hier strichpunktiert angedeuteten Rohres 12 einschiebbar. Der Muffenkörper 2 wird zumindest im Bereich der Ausnehmung 8 von einem Haltering 14 umgeben. Der Haltering besteht aus Metall, insbesondere aus Federstahl, und besitzt am freien Ende radial nach innen abgewinkelte Haltekrallen 16. Über den Umfang verteilt ist cine vorgegebene Anzahl derartiger, unabhängig voneinander bewegbarer Haltekrallen 16 angeordnet, zwischen welchen zweckmäßig schmale Schlitze 18 vorhanden sind. Das Rohr 12 besitzt einen Außendurchmesser 20, welcher größer ist als der Innendurchmesser der Krallen 16. Das Rohr 12 besteht insbesondere aus Kunststoff und nach dem Einschieben des Rohres 12 in den Muffenkörper 2 haken die Krallen 16 in der vergleichsweise weichen Außenfläche sich fest, so daß das Rohr 12 bezüglich des Muffenkörpers 2 gegen ein Herauslösen axial gesichert ist.

Der Haltering 14 ist im wesentlichen zylindrisch ausgebildet und außen am Muffenkörper 2 festgelegt. Wie mit gestrichelten Linien 22 stark vergrößert angedeutet, ist der Haltering 14 durch örtliches radiales Verpressen in Richtung zur Längsachse 24 auf dem Muffenkörper 2 befestigt. Hierzu weist der Haltering über den Umfang verteilt Einschnitte, Widerhaken oder dergleichen auf, welche nach dem Aufschieben auf den Muffenkörper 2 ein radiales Festklemmen auf dem Muffenkörper 2 ermöglichen. Andererseits weist der Haltering 14 eine gegenüber dem Material des Muffenkörpers 2 erheblich höhere Festigkeit auf, so daß im Bereich der Ausnehmung 8 der Muffenkörper 2 nur eine vergleichsweise geringe Wandstärke 26 aufweist. Somit ist für den Dichtring 10 eine stabile radiale Abstützung gewährleistet und eine dauerhafte Verpressung in der Ausnehmung 8 und letztendlich ist eine funktionssichere Dichtung gewährleistet. Die axiale Länge 28 des Halterings 14 ist in zweckmäßiger Weise um einen vorgebbaren Faktor größer als die axiale Länge der Ausnehmung 8. Hierdurch ist sichergestellt, daß beim radialen Festklemmen des Halterings 14 Beschädigungen des Muffenkörpers vermieden werden. Der Haltering 14 und die Haltekrallen 16 sind bezüglich des Dichtringes 10 und dem Inneren des Rohres zur Außenseite hin angeordnet, so daß der Haltering keinem Angriff durch das im Inneren der Rohrleitung vorhandene Medium ausgesetzt ist.

Der Muffenkörper 2 ist gemeinsam mit dem Haltering 14 von einem Ringkörper 30 umgeben, welcher nachfolgend auch als Führungshaube bezeichnet wird. Der Ringkörper 30 umgreift mit seinem ersten Ende 32 ein Ringteil 34 des Muffenkörpers 2. Das erste Ende 32 ist mit dem Ringteil 34, insbesondere über eine Klebeverbindung fest verbunden. Bedarfsweise kann im Rahmen der Erfindung die Verbindung des Ringkörpers 30 mit dem Muffenkörper 2 auch auf andere Art, insbesondere durch eine Gewindeverbindung, erfolgen.

In der Ausnehmung 8 ist ferner eine Druckscheibe 36 vorgesehen, welche zwischen dem Dichtring 10 und den Krallen 16 des Halterings angeordnet ist. Durch den Mediumdruck im Inneren des Rohrleitungssystems wird die Druckscheibe 36 in Richtung des Pfeiles 38 an die Krallen 16 gepreßt, so daß die am Rohr 12 angreifenden Haltekräfte noch erhöht werden. Wie ersichtlich, sind die Krallen 16 bezüglich einer Radialebene 40 um einen vorgegebenen Winkel 42 in Richtung auf den Grund oder das Innere des Muffenkörpers 2 geneigt angeordnet. Die den Haltekrallen 16 zugewandte Stirnfläche 44 der Druckscheibe 36 ist gleichfalls geneigt ausgebildet, und zwar im wesentlichen entsprechend dem Neigungswinkel der Haltekrallen 16. Beim Einwirken des Mediumdrucks liegt damit die Druckscheibe weitgehend flächig an den Haltekrallen 16, so daß einerseits eine gleichmäßige Krafteinleitung erfolgt und andererseits Beschädigungen der Druckscheibe vermieden werden. Die Druckscheibe 36 besteht vorzugsweise aus Hartgummi. Da der Haltering nicht innerhalb der Ausnehmung, sondern außerhalb derselben und den Muffenkörper umgebend angeordnet ist, weisen die in Richtung zur Längsachse 24 in der erläuterten Weise abgewinkelten Haltekrallen 16 eine vergleichsweise große Länge bzw. Federweglänge auf. Schließlich sei ausdrücklich darauf hingewiesen, daß der Haltering 14 axial zwischen dem freien Ende des Muffenkörpers 2 und einer gegenüberliegenden inneren Anlagefläche 46 der Führungshaube 30 festgelegt ist, so daß axiale Relativbewegungen des Rohres 12 bezüglich des Muffenkörpers unterbunden werden.

Die Führungshaube 30 weist an ihrem zweiten Ende, welches dem Muffenkörper 2 abgewandt ist, eine ringförmige Verlängerung 48 auf. Diese Verlängerung 48 umgibt mit möglichst geringem Spiel das Rohr 12 und dient zur Führung und Abstützung des Rohres 12. Besteht das Rohr 12 aus flexiblem Material, insbesondere Kunststoff, so wird mittels der Verlängerung sichergestellt, daß insbesondere Querkräfte, vom Haltering 14 bzw. dessen Krallen 16 ebenso ferngehalten werden, wie vom Dichtring 10. Änderungen der Geometrie und letztendlich geänderte Bedingungen für die Dichtwirkung und die Haltewirkung werden somit zuverlässig vermieden.

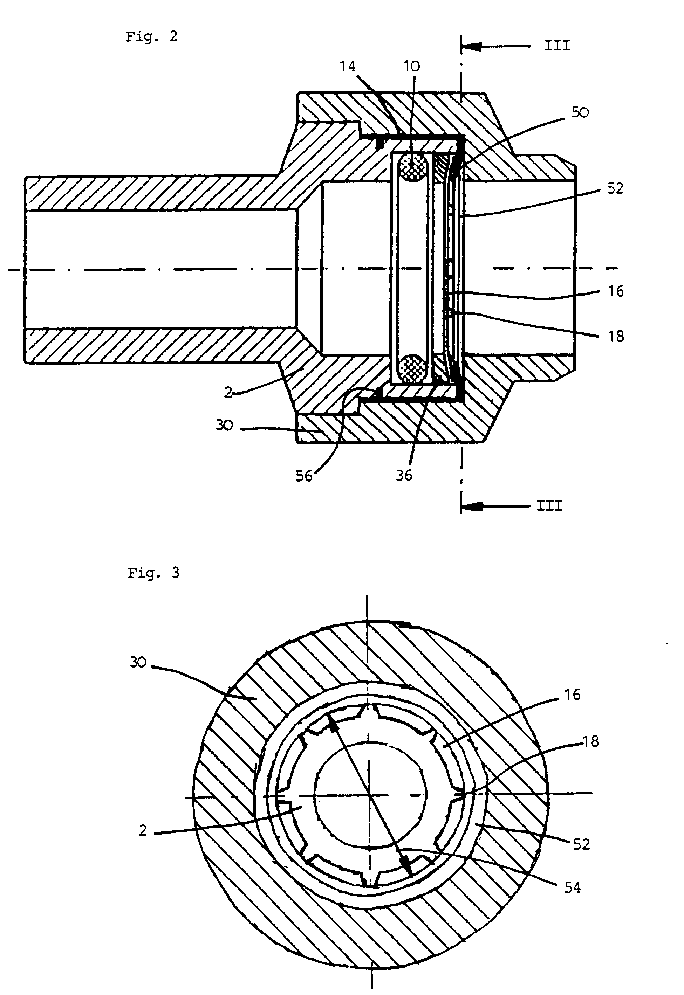

Fig. 2 und 3 zeigen eine besondere Ausgestaltung der Verbindungsanordnung, bei welcher die Haltekrallen 16 nicht integraler Bestandteil des Halterings sind. Vielmehr ist ein Sicherungsring 50 vorgesehen, welcher vorzugsweise in der Ausnehmung 8 des Muffenkörpers 2 drehbar angeordnet ist und welcher radial innen die Haltekrallen 16 aufweist. Der Haltering 14 übergreift mit einem radial nach innen abgewinkelten Vorderteil 52 teilweise den Sicherungsring 50, welcher folglich zusammen mit der Druckscheibe 36 und dem Dichtring 10 in der Ausnehmung 8 aus den oben erläuterten Gründen festgelegt ist. Das radial nach innen abgewinkelte Vorderteil 52 besitzt einen Innendurchmesser 54, welcher kleiner ist als der Außendurchmesser des Sicherungsrings 50. Desweiteren ist der Innendurchmesser 54 aber größer als der Außendurchmesser des zu verbindenden Rohres, so daß dieses ohne weiteres in der erforderlichen Weise in den Muffenkörper 2 eingeführt werden kann. Da das Vorderteil 52 des Halterings 14 den Sicherungsring 50 und zweckmäßig auch dessen Haltekrallen 16 zumindest teilweise übergreift, wird in in zweckmäßiger Weise eine Stabilisierung des Sicherungsrings 50 gewährleistet.

Treten nach dem Einsetzen des Rohres zwischen dem Muffenkörper 2 und dem eingesetzten Rohr axiale Zugkräfte auf, so können die Haltekrallen 16 vom Vorderteil 52 abgestützt werden und die Haltekrallen 16 sind folglich gegen ein "Umklappen" durch das Vorderteil 52 gesichert.

Aufgrund der separaten Ausbildung des Sicherungsrings 50 mit den Haltekrallen 16 und dessen Drehbarkeit im Muffenkörper 2 wird beim Drehen des Rohres bezüglich des Muffenkörpers 2 auch der Sicherungsring 50 mitgedreht, wobei eine Relativbewegung des Sicherungsrings 50 bezüglich des Rohres vermieden wird. Es sei angemerkt, daß im Falle von möglichen Relativ-Drehbewegungen des Rohres bezüglich der Haltekrallen das Rohr durch Drehen und gleichzeitiges Ziehen, ähnlich einem Gewinde, aus den Haltekrallen mit Gewalt herausgedreht und demontiert werden kann. Dies wird jedoch funktionssicher durch die Drehbarkeit des die Haltekrallen 16 aufweisenden Sicherungsrings 50 unterbunden.

Zur axialen Festlegung des Halterings 14 bezüglich des Muffenkörpers 2 weist der Haltering 14 an dem von genannten Vorderteil 52 abgewandten Ende radial nach innen gerichtete Haken 56 auf, welche in den Muffenkörper 2, welcher insbesondere aus Kunststoff besteht, eingepreßt sind. Der Haltering 14 wird in zweckmäßiger Weise werksseitig mit dem Muffenkörper 2, insbesondere mittels den Haken 16 oder in der eingangs bereits erläuterten Weise, fest verbunden. Somit sind der Dichring 10, die Druckscheibe 36 und insbesondere auch der Sicherungsring 50, welche zuvor in die Ausnehmung 8 eingesetzt sind, sicher mittels des Halterings 14 bezüglich des Muffenkörpers 2 festgelegt und können vor der Montage und Herstellung der Verbindung mit dem Rohrende praktisch nicht verlorengehen.

### Bezugszeichen

- 2: Muffenkörper
- 4: Stutzen
- 6: Außenfläche von 4
- 8: Ausnehmung
- 10: Dichtring
- 12: Rohr
- 14: Haltering
- 16: Haltekrallen
- 18: Schlitz
- 20: Außendurchmesser von 12
- 22: gestrichelte Linie
- 26: Wanddicke
- 28: Länge von 14
- 30: Ringkörper / Führungshaube
- 32: erstes Ende von 30
- 34: Ringteil von 2
- 36: Druckscheibe
- 38: Pfeil
- 40: Radialebene
- 42: Winkel
- 44: Stirnfläche von 36
- 46: Anlagefläche
- 48: Verlängerung von 30
- 50: Sicherungsring
- 52: Vorderteil von 14
- 54: Innendurchmesser
- 56: Haken

## Patentansprüche

1. Verbindungsanordnung für Rohre, Formkörper oder dergleichen, enthaltend einen Muffenkörper (2), in welchen ein Rohrende (12) einsetzbar ist, einen Haltering (14), Haltekrallen (16) zum axialen Fixieren des Rohrendes (12), einen in einer Ausnehmung (8) des Muffenkörpers (2) angeordneten Dichtring (10) und einen den Muffenkörper (2) zumindest teilweise umgebenden Ringkörper (30), wobei der Haltering (14) außerhalb der Ausnehmung (8) angeordnet ist und den Muffenkörper (2) zumindest im Bereich der Ausnehmung (8) umgibt und wobei die Haltekrallen (16) bezüglich des Dichtrings (10) zur Außenseite hin angeordnet sind,
dadurch gekennzeichnet, daß der Haltering (14) axial durch Wirkung eines freien Endes des Muffenkörpers (2) und einer gegenüberliegenden inneren Anlagefläche (46) des Ringkörpers (30) festgelegt ist
und daß der Muffenkörper (2) mittels des umgebenden Halterings (14) im Bereich der Ausnehmung (8) mit dem Dichtring (10) zu dessen radialer Abstützung stabilisiert ist.

2. Verbindungsanordnung nach Anspruch 1, dadurch gekennzeichnet, daß die Haltekrallen (16) Bestandteil des Halterings (14) sind oder daß ein bezüglich einer Längsachse (24) der Verbindungsanordnung drehbarer Sicherungsring (50) die Haltekrallen (16) aufweist, wobei der vorzugsweise in der Ausnehmung (8) angeordnete Sicherungsring (50) mittels des Halterings (14) festgelegt ist.

3. Verbindungsanordnung nach Anspruch 1 oder 2, dadurch gekennzeichnet, daß die axiale Länge (28) des Halteringes (14) größer ist als die axiale Länge der Ausnehmung (8).

4. Verbindungsanordnung nach einem der Ansprüche 1 bis 3, dadurch gekennzeichnet, daß die Haltekrallen (16) am freien Ende der Ausnehmung (8) angeordnet sind und die Ausnehmung (8) am freien Ende des Muffenkörpers (2) begrenzen.

5. Verbindungsanordnung nach einem der Ansprüche 1 bis 4 , dadurch gekennzeichnet, daß der Haltering (14) an der Außenfläche des Muffenkörpers (2), insbesondere durch radiale Verformung und/oder verformbare Bereiche (22) und/oder Haken (56) axial festgelegt ist.

6. Verbindungsanordnung nach einem der Ansprüche 1 bis 5, dadurch gekennzeichnet, daß in der Ausnehmung (8) zwischen dem Dichtring (10) und den Haltekrallen (16) eine Druckscheibe (36) angeordnet ist.

7. Verbindungsanordnung nach Anspruch 6, dadurch gekennzeichnet, daß die den Haltekrallen (16) zugewandte Stirnfläche (44) der Druckscheibe (36) bezüglich einer Radialebene (40) entsprechend den Haltekrallen (16) um einen Winkel (42) geneigt angeordnet ist.

8. Verbindungsanordnung nach einem der Ansprüche 2 bis 7, dadurch gekennzeichnet, daß der Haltering (14) ein radial nach innen abgewinkeltes Vorderteil (52) aufweist, dessen Innendurchmesser (54) kleiner ist als der Außendurchmesser des die Haltekrallen (16) aufweisenden Sicherungsrings (50).

9. Verbindungsanordnung nach einem der Ansprüche 1 bis 8, dadurch gekennzeichnet, daß der Haltering (14) zwischen dem Ringkörper (30) und einem Teil der Außenfläche des Muffenkörpers (2) angeordnet ist und/oder daß der Ringkörper (30) über sein erstes freies Ende (32) mit dem Muffenkörper (2) verbunden ist, wobei das erste Ende (32) axial anschließend an den Haltering (14) vorgesehen ist.

10. Verbindungsanordnung nach einem der Ansprüche 1 bis 9, dadurch gekennzeichnet, daß der Ringkörper (30) als Führungshaube ausgebildet ist und/oder eine ringförmige Verlängerung (48) aufweist, welche über eine vorgegebene axiale Länge das Rohr (12) umgreift.

## Claims

1. Arrangement for connecting pipes, moulded components or suchlike, comprising a sleeve body (2) into which the end of a pipe (12) can be inserted, a holding ring (14), holding claws (16) for the axial fixing of the pipe end (12), a sealing ring (10) positioned in a recess (8) of the sleeve body (2) and an annular body (30) which at least partially surrounds the sleeve body (2), such that the holding ring (14) is located outside the recess (8) and surrounds the sleeve body (2) at least in the area of the recess (8), and such that the holding claws (16) are arranged on the outside relative to the sealing ring (10),
**characterized in that**
the holding ring (14) is held fast axially by the action of a free end of the sleeve body (2) and an opposite, inside contact surface (46) of the annular body (30), and in that the sleeve body (2) is stabilized by means of the surrounding holding ring (14) in the area of the recess (8) with the sealing ring (10) to provide radial support for it.

2. Connecting arrangement according to Claim 1,
**characterized in that**
the holding claws (16) are part of the holding ring (14) or are part of a securing ring (50) that can rotate relative to a longitudinal axis (24) of the connecting arrangement, such that the securing ring (50) is preferably held inside the recess (8) by means of the holding ring (14).

3. Connecting arrangement according to Claims 1 or 2,
**characterized in that**
the axial length (28) of the holding ring (14) is greater than the axial length of the recess (8).

4. Connecting arrangement according to any of Claims 1 to 3,
**characterized in that**
the holding claws (16) are positioned at the free end of the recess (8) and limit the recess (8) at the free end of the sleeve body (2).

5. Connecting arrangement according to any of Claims 1 to 4,
**characterized in that**
the holding ring (14) is axially fixed on the outer surface of the sleeve body (2), in particular by radial deformation and/or deformable areas (22) and/or hooks (56).

6. Connecting arrangement according to any of Claims 1 to 5,
**characterized in that**
a pressure disc (36) is positioned in the recess (8) between the sealing ring (10) and the holding claws (16).

7. Connecting arrangement according to Claim 6,
**characterized in that**
the end face (44) of the pressure disc (36) facing towards the holding claws (16) is inclined at an angle (42) with respect to a radial plane (40), corresponding to the inclination of the holding claws (16).

8. Connecting arrangement according to any of Claims 2 to 7,
**characterized in that**
the holding ring (14) comprises a front portion (52) angled radially inwards, whose inside diameter (54) is smaller than the outside diameter of the securing ring (50) of which the holding claws (16) are part.

9. Connecting arrangement according to any of Claims 1 to 8,
**characterized in that**
the holding ring (14) is positioned between the annular body (30) and part of the outer surface of the sleeve body (2), and/or the annular body (30) is attached at its first free end (32) to the sleeve body (2), such that the said first end (32) is located axially adjacent to the holding ring (14).

10. Connecting arrangement according to any of Claims 1 to 9,
**characterized in that**
the annular body (30) is formed as a guiding cap and/or it has an annular extension (48), which extends over a certain axial length of the pipe (12).

## Revendications

1. Ensemble de raccordement pour tuyaux, corps moulés ou analogues, contenant un corps de manchon (2), dans lequel peut s'insérer une extrémité de tuyau (12), une bague de maintien (14), des griffes de maintien (16) pour la fixation axiale de l'extrémité de tuyau (12), une bague d'étanchéité (10) placée dans un évidement (8) du corps de manchon (2) et un corps annulaire (30) entourant au moins partiellement le corps de manchon (2), la bague de maintien (14) étant placée en dehors de l'évidement (8) et entourant le corps de manchon (2) au moins au niveau de l'évidement (8) et les griffes de maintien (16) étant placées en direction de l'extérieur par rapport à la bague d'étanchéité (10), ***caractérisé en ce que*** la bague de maintien (14) est immobilisée axialement par l'effet d'une extrémité libre du corps de manchon (2) et d'une surface d'appui intérieure (46) opposée du corps annulaire (30), et ***en ce que*** le corps de manchon (2) est stabilisé au moyen de la bague de maintien (14) l'entourant au niveau de l'évidement (8) avec la bague d'étanchéité (10) pour son appui radial.

2. Ensemble de raccordement selon la Revendication 1, ***caractérisé en ce que*** les griffes de maintien (16) font partie de la bague de maintien (14) ou ***en ce qu***'une bague d'arrêt (50) pouvant tourner par rapport à un axe longitudinal (24) de l'ensemble de raccordement présente les griffes de maintien (16), la bague d'arrêt (50) placée de préférence dans l'évidement (8) étant immobilisée au moyen de la bague de maintien (14).

3. Ensemble de raccordement selon la Revendication 1 ou 2, ***caractérisé en ce que*** la longueur axiale (28) de la bague de maintien (14) est supérieure à la longueur axiale de l'évidement (8).

4. Ensemble de raccordement selon l'une quelconque des Revendications 1 à 3, ***caractérisé en ce que*** les griffes de maintien (16) sont placées à l'extrémité libre de l'évidement (8) et délimitent l'évidement (8) à l'extrémité libre du corps de manchon (2).

5. Ensemble de raccordement selon l'une quelconque des Revendications 1 à 4, ***caractérisé en ce que*** la bague de maintien (14) est immobilisée axialement sur la surface extérieure du corps de manchon (2), en particulier par une déformation radiale et/ou des zones déformables (22) et/ou des crochets (56).

6. Ensemble de raccordement selon l'une quelconque des Revendications 1 à 5, ***caractérisé en ce qu'***est placée dans l'évidement (8), entre la bague d'étanchéité (10) et les griffes de maintien (16), une rondelle de pression (36).

7. Ensemble de raccordement selon la Revendication 6, ***caractérisé en ce que*** la face frontale (44) de la rondelle de pression (36) tournée vers les griffes de maintien (16) est placée inclinée d'un angle (42) par rapport à un plan radial (40) d'une manière correspondant aux griffes de maintien (16).

8. Ensemble de raccordement selon l'une quelconque des Revendications 2 à 7, ***caractérisé en ce que*** la bague de maintien (14) présente une partie avant (52) coudée radialement vers l'intérieur, dont le diamètre intérieur (54) est inférieur au diamètre extérieur de la bague d'arrêt (50) présentant les griffes de maintien (16).

9. Ensemble de raccordement selon l'une quelconque des Revendications 1 à 3, ***caractérisé en ce que*** la bague de maintien (14) est placée entre le corps annulaire (30) et une partie de la surface extérieure du corps de manchon (2) et/ou ***en ce que*** le corps annulaire (30) est relié par sa première extrémité libre (32) au corps de manchon (2), la première extrémité (32) étant prévue axialement à la suite de la bague de maintien (14).

10. Ensemble de raccordement selon l'une quelconque des Revendications 1 à 9, ***caractérisé en ce que*** le corps annulaire (30) est conformé en capuchon de guidage et/ou présente un prolongement annulaire (48), qui enserre le tuyau (12) sur une longueur axiale prédéterminée.
